Europäisches Patentamt

European Patent Office

Office européen des brevets

(19)

(11) Publication number: **0 056 865**
**B1**

# EUROPEAN PATENT SPECIFICATION

(12)

(45) Date of publication of patent specification: **31.07.85**

(51) Int. Cl.⁴: **E 02 F 9/12**

(21) Application number: **81110687.1**

(22) Date of filing: **22.12.81**

(54) **Hydraulic power system.**

<table>
<tr><td>

(30) Priority: **27.12.80 JP 187130/80**
**27.12.80 JP 187132/80**
**27.12.80 JP 187134/80**
**13.02.81 JP 19067/81**

(43) Date of publication of application:
**04.08.82 Bulletin 82/31**

(45) Publication of the grant of the patent:
**31.07.85 Bulletin 85/31**

(84) Designated Contracting States:
**DE FR**

(56) References cited:
**DE-A-2 400 719**
**DE-A-2 701 297**
**GB-A- 846 241**
**US-A-3 943 713**
**US-A-4 189 921**

</td><td>

(73) Proprietor: **HITACHI CONSTRUCTION**
**MACHINERY CO., LTD.**
**2-10, Uchikanda-1-chome**
**Chiyoda-ku Tokyo 101 (JP)**

(72) Inventor: **Aoyagi, Yukio**
**1828-4-405, Oaza Niihari Chiyodamura**
**Niihari-gun Ibaraki-ken (JP)**
Inventor: **Izumi, Eiki**
**2613-343, Oaza Shimoinayoshi Chiyodamura**
**Niihari-gun Ibaraki-ken (JP)**
Inventor: **Tanaka, Sotaro**
**24-19, Kariya-5-chome Ushikucho**
**Inashiki-gun Ibaraki-ken (JP)**
Inventor: **Yamaguchi, Takeshi**
**3-13, Otsutominami-2-chome**
**Tsuchiura-shi (JP)**
Inventor: **Ichiyama, Shuichi**
**3-8-4509, Kidamari**
**Tsuchiura-shi (JP)**
Inventor: **Murata, Yasuhiko**
**511-10, Oaza Taguu Ushikucho**
**Inashiki-gun Ibaraki-ken (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Background of the Invention

This invention relates to hydraulic power systems, and more particularly to a hydraulic power system suitable for driving a load having high inertia such as a swivelling member of a hydraulic excavator, wherein motor stopping means for preventing a hydraulic motor from rotating can be automatically actuated.

Generally, in a hydraulic power system suitable for driving by a hydraulic motor a load having high inertia such as a swivelling member of a hydraulic excavator, it is necessary to detect whether the hydraulic motor is inoperative or operating at a velocity near the position in which it is inoperative, in order to automatically actuate motor stopping means for preventing the hydraulic motor from rotating without causing wear or damage thereto. The following proposals have hitherto been made to use control devices provided with this type of detecting means.

(1) In one control device as disclosed in Japanese Patent Application Laid-Open No. 98470/79 and Japanese Utility Model Application Laid-Open No. 13222/80, the output shaft of a hydraulic motor for actuating a load has connected thereto an ancillary hydraulic pump separate from a hydraulic pump for actuating a hydraulic motor, so that the condition of rotation of the hydraulic motor can be detected by the pressure fluid delivered thereby.

(2) In another type of control device as disclosed in Japanese Patent Application Laid-Open No. 98471/79, a throttle valve is mounted anteriorly or posteriorly of a hydraulic motor in a main line in which the hydraulic motor is mounted, so that the flow of hydraulic fluid in the main line can be detected by the differential pressure in the throttle valve and the condition of rotation of the hydraulic motor can be detected thereby.

(3) In still another control device, cross-over relief valves are mounted anteriorly and posteriorly of a hydraulic motor in a main line in which the hydraulic motor is mounted and the relief condition of such valves is detected. On this device, the condition of rotation of the hydraulic motor is detected because the condition of a pumping action of the hydraulic motor is detected.

Some disadvantages are associated with all the control devices of the aforesaid type. The control device described in paragraph (1) would become high in cost because of the fact that the construction is rendered complex by the addition of the ancillary hydraulic pump, and there would be a loss of power. In the control device described in paragraph (2), the provision of the throttle valve in the main line would cause a loss of power to occur due to a pressure loss, and the control device described in paragraph (3) would be unable to obtain accurate results of detection because its performance is generally governed by the characteristics of the cross-over relief valves in which the operation of the relief valves becomes unstable in a low flowrate region.

Heretofore, in a hydraulic closed circuit, proposals have been made to use a control device which is operative to actuate motor stopping means for preventing a hydraulic motor from rotating only when a control lever for controlling the displacement volume of a variable displacement hydraulic pump is in a neutral position. When a load of high inertia is driven, the hydraulic motor may continue to rotate while relieving is carried out through cross-over relief valves even if the control valve is restored to the neutral position. In order to avoid operation of the motor stopping means in this condition, proposals have been made, as disclosed in Japanese Patent Application Laid-Open No. 108170/79, for example, to provide a predetermined time lag after the control lever is restored to the neutral position before the motor stopping means begins to operate. This time lag is obtained, for example, by providing a throttle valve in a line in which the motor stopping means is mounted. However, setting of a time lag by means of a throttle valve is not desirable because the time lag might be caused to vary by wide changes in the viscosity of the working fluid that might occur when the working fluid has its temperature undergo changes. Moreover, as in the case of a swivelling member of a hydraulic excavator, where the inertia of a load applied to the hydraulic motor greatly varies depending on the condition of the load of an earth-moving machine and the position of such load, the period of time in which the relieving condition of the cross-over relief valves continues to exist would greatly vary. Thus difficulties would be faced with in setting the time lag for allowing the motor stopping means to be actuated immediately after the hydraulic motor is essentially rendered inoperative in such a manner that the time lag suits all the conditions.

From US—A—4,189,921 a hydraulic power system is known, comprising a variable displacement hydraulic pump, a hydraulic motor driven by said hydraulic pump for actuating a load, the pump and the motor being connected to constitute a closed hydraulic circuit and hydraulic servo means for controlling the displacement volume of the pump. The system further comprises a control valve responsive to a main line pressure in the closed hydraulic circuit for controlling a hydraulic fluid supply to the servo means to prevent the main line pressure from substantially exceeding a predetermined level.

DE—A 2400719 discloses a hydraulic control system having brake means for a motor, servo means for a pump and valve means associated with the servo means for controlling the brake means. The system further comprises a first switch and a second switch for controlling an electric current to the valve means. The first switch is manually actuated to a closed position to cause the current to pass to the valve means and to release the operation of the brake, when the operation of the motor is desired.

## Summary of the Invention

This invention has been developed in view of the status of the art set forth hereinabove. Accordingly the invention has as its object the provision of a hydraulic power system capable of automatically actuating motor stopping means for preventing a hydraulic motor from rotating immediately after the hydraulic motor stops rotating.

The aforesaid object is accomplished according to the invention by providing a hydraulic power system as described in claim 1.

In a preferred embodiment, the motor stopping means comprises brake means adapted to release the motor from a braked condition when a control pressure from a hydraulic fluid source is received, and said control means comprises first pressure transmission control means interlocked with input means of said servo means for transmitting said control pressure to said brake means when said input means is actuated, and second pressure transmission control means responsive to the pressure of a hydraulic fluid supply to said servo means on the output side of the control valve for transmitting said control pressure to said brake means when said supply pressure is substantially lower than a normal supply pressure of the hydraulic fluid source.

In another preferred embodiment, said control means comprises first pressure transmission control means associated with input means of said servo means for transmitting said control pressure to said brake means when said input means is actuated, and second pressure transmission control means responsive to the operational pressure of a hydraulic fluid in said servo means on the output side of a servo valve thereof for transmitting said control pressure to said brake means when said operational pressure is substantially higher than a drain pressure.

In still another preferred embodiment, said control means comprises first pressure transmission control means associated with input means of said servo means for transmitting said control pressure to said brake means when said input means is actuated, and second pressure transmission control means response to the actuation of a servo valve of said servo means for preventing the release of said control pressure received in said brake means until said servo valve is restored to a neutral position.

In a further preferred embodiment, said control means comprises pressure transmission control means responsive to the operational pressure of a hydraulic fluid in said servo means on the output side of a servo valve thereof for transmitting said control pressure to said brake means when said operational pressure is substantially higher than a drain pressure.

It should be noted that in the specification, "the operation of servo means" is used as meaning not only the operation of the servo means caused by actuating input means of the servo means for accelerating a hydraulic motor and maintaining the speed of the motor at a desired rate, but also the operation of the servo means in a transient intermediate position caused by returning the input means to a neutral position for deceleration of the motor.

## Brief Description of the Drawings

Fig. 1 is a circuit diagram of the hydraulic power system comprising a first embodiment of the invention;

Fig. 2 is a circuit diagram of a modification of the first embodiment shown in Fig. 1;

Fig. 3 is a circuit diagram of the hydraulic power system comprising a second embodiment;

Fig. 4 is a circuit diagram of a modification of the second embodiment shown in Fig. 3;

Fig. 5 is a circuit diagram of the hydraulic power system comprising a third embodiment;

Fig. 6 is a sectional view of one example of the servo valve of the hydraulic servo means of the third embodiment shown in Fig. 5;

Fig. 7 is a circuit diagram of a modification of the third embodiment shown in Fig. 5;

Fig. 8 is a circuit diagram of the hydraulic power system comprising a fourth embodiment;

Fig. 9 is a graph showing the values at which is set the reaction imparting means associated with the servo means of the fourth embodiment shown in Fig. 8; and

Fig. 10 is a circuit diagram of a modification of the fourth embodiment shown in Fig. 8.

## Description of the Preferred Embodiments

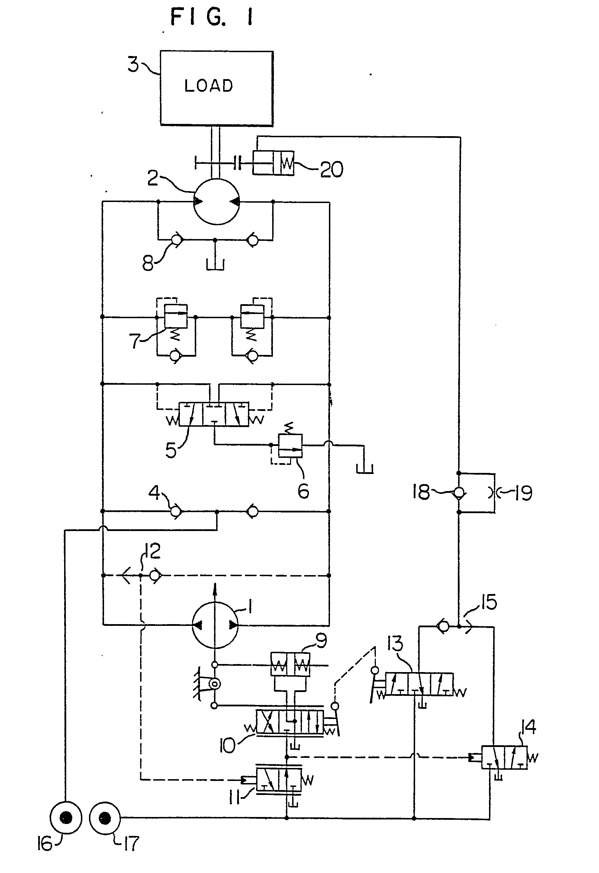

The hydraulic power system according to the invention will now be described by referring to preferred embodiments thereof shown in the accompanying drawings. Fig. 1 shows a first embodiment in which the system comprises a variable displacement hydraulic pump 1 and a hydraulic motor 2 driven by the pump 1, the motor 2 being adapted to actuate a load 3. The pump 1 and motor 2 are connected to constitute a closed hydraulic circuit, to which a charge hydraulic fluid is supplied from a charge hydraulic fluid source 16. Check valves 4 are interposed between main lines connecting the pump 1 to the motor 2 and the charge hydraulic fluid source 16. Excess flow of hydraulic fluid in the closed circuit corresponding to the charge hydraulic fluid from the source 16 is discharged from a low-pressure main line by means of a flushing valve 5. Located downstream of the flushing valve 5 is a relief valve 6 for setting a lowest pressure for the closed circuit, while a highest pressure for the closed circuit is set by cross-over relief valves 7. Check valves 8 are arranged for supplying a hydraulic fluid to the closed circuit from a reservoir in the absence of a charge from the charge hydraulic fluid source 16. The pump 1 is connected to a servo cylinder 9 for operating a displacement volume control member of the pump 1. The servo cylinder 9 is controlled by a servo valve 10 responsive to actuation of input means such as an operation lever. The servo cylinder 9 and servo valve 10 constitute hydraulic servo means for controlling the displacement volume of the variable displacement hydraulic pump 1. The motor 2 is prevented from rotating by motor stopping means 20 in its operative position, which may be brake means comprising a hydraulic cylinder applying the brake force to an output shaft of the motor 2. The brake means 20 is supplied with a control pressure from a hydraulic fluid source 17 for releasing thereof from the operative position.

The hydraulic power system also comprises a control valve 11 for controlling the operation of the hydraulic servo means connected to the hydraulic fluid source 17. The control valve 11 may be connected to a hydraulic fluid source of a separate system. A shuttle valve 12 is connected to the main lines of the closed circuit for withdrawing pressure from a high-pressure main line, and the pressure is applied to the control valve 11 for actuation thereof. Stated differently, the control valve 11 uses the pressure in the high-pressure main line as a pilot pressure for controlling a hydraulic fluid supply to the servo means to prevent the pressure in the main line from substantially exceeding a predetermined level. The control valve 11 is set at a pressure lower than the pressure at which the cross-over relief valves 7 are set.

The system also comprises a directional control valve 13 interlocked to an operation lever for operating the servo valve 10, and a directional control valve 14 responsive to the supply pressure to the servo means on the output side of the control valve 11. The directional control valves 13 and 14 are connected in parallel in a line connecting the brake means 20 to the hydraulic fluid source 17. A shuttle valve 15 is connected in the line for selecting a higher pressure of the pressures supplied from the valves 13 and 14. Thus the directional control valve 13 constitutes first pressure transmission control means interlocked with the input means of the servo means for transmitting a control pressure to the brake means 20 when the input means is actuated, and the directional control valve 14 constitutes second pressure transmission control means responsive to the pressure of a hydraulic fluid supply to the servo means on the output side of the control valve 11 for transmitting the control pressure to the brake means 20 when the supply pressure is substantially lower than a normal supply pressure from the hydraulic fluid source 17. Thus the first and second pressure transmission control means constitute control means responsive to the operation of the servo means for releasing the motor stopping means from the operative position when the servo means is under operation.

A check valve 18 is mounted in the line connecting the shuttle valve 15 to the brake means 20 for allowing only a flow of hydraulic fluid from the shuttle valve 15 to the brake means 20, and a throttle valve 19 is mounted in parallel with the check valve 18. The check valve 18 and throttle valve 19 are operative to avoid actuation of the brake means 20 in a transient period such as a period during which operational pressure is produced on the output side of the servo valve 10 after the input means of the servo valve 10 is brought to a neutral position.

The hydraulic power system of the aforesaid construction operates as follows. In acceleration operation of the hydraulic motor 2, actuation of the operation lever of the servo valve 10 causes the hydraulic servo means composed of the servo cylinder 9 and servo valve 10 to control the displacement volume of the hydraulic pump 1 in accordance with the actuated stroke of the lever. At this time, the directional control valve 13 interlocked to the operation lever of the servo valve 10 is switched to allow a control pressure fluid from the hydraulic fluid source 17 to flow through the valve 13, shuttle valve 15 and check valve 18 to the brake means 20 thereby to release the latter from the operative position. As a result, the hydraulic motor 2 tends to operate at a speed commensurate with the displacement volume of the hydraulic pump 1. When the load 3 has high inertia, the motor 2 is prevented from reaching the speed of interest immediately, thereby causing the pressure in the main line on the discharge side of the pump 1 to rise. The pressure is transmitted through the shuttle valve 12 to the control valve 11 and actuates same when the pressure exceeds a predetermined level set for actuation thereof. This reduces the flow rate of the fluid supplied from the source 17 to the servo valve 10 thereby to reduce the rate of change in the displacement volume of the pump 1 and thus in the discharge flow rate thereof. Generally, the drive pressure generated upon driving a load of inertia is proportional to the rate of change in the discharge flow rate of the pump 1, and therefore the main line pressure is lowered at this time. In this way, the pressure in the main lines is controlled not to substantially exceed the predetermined level set by the control valve 11.

In deceleration operation of the hydraulic motor 2 or when the operation lever of the servo valve 10 is returned to a neutral position from a given manipulated position in which the hydraulic motor 2 rotates at a constant speed in steadystate operation, the displacement volume of the hydraulic pump 1 tends to drop by the returning of the operation lever of the servo motor 10 to the neutral position. However, at this time the inertia of the load 3 acts on the motor 2 and causes the pressure in the main line on the suction side of the pump 1 to rise. This is what is referred to as a pumping action of the motor 2. The pressure in the main line on the suction side acts on the control valve 11 through the shuttle valve 12 and reduces the rate of change in the displacement volume of the pump 1 so that the pressure in the main line on the suction side is controlled not to exceed substantially the predetermined level set by the control valve 11. Since the control valve 11 is set at a level lower than the pressure at which the cross-over relief valves 7 are set as aforesaid, there is no risk of power loss or generation of heat due to the relief operation both in acceleration and deceleration.

When the operation lever of the servo valve 10 is returned to the neutral position, the directional control valve 13 interlocked thereto is also returned to a neutral position to communicate a line to the brake means 20 to reservoir. However, at this time the pressure in the main line on the suction side of the hydraulic pump 1 quickly rises and the control valve 11 is actuated as above mentioned. Thus the servo valve 10 is prevented from following up at once the operation lever and returning to the neutral position and is maintained in a transient intermediate position, and therefore the tilting angle of the pump 1 is prevented from returning to the neutral position instantly. At this time, the pressure on the output side of the control valve 11 drops below the normal supply pressure of the pressure fluid source 17 and the pressure drop actuates the directional control valve 14. Thus when the servo valve 10 is in the transient intermediate position, the releasing of the brake means 20 from the operative position is continued by the control pressure supplied through the directional control valve 14. When the servo valve 10 is brought to the neutral position, in which the pump 1 is in the neutral position and the motor 2 substantially stops rotating, the directional control valve 14 is returned to the neutral position, and the brake means 20 is actuated to take the operative position since the directional control valve 13 is also in the neutral position.

It will be noted that in the first embodiment of the hydraulic power system in conformity with the invention, it is possible to release the brake means 20 from the operative position not only when the operation lever of the servo valve 10 is actuated but also until the motor 2 substantially stops rotating even after the operation lever is returned to the neutral position, and it is also possible to actuate the brake means 20 as soon as the motor 20 stops rotating, so that the brake means 20 is completely free from the influences of changes in the inertia of the load 3.

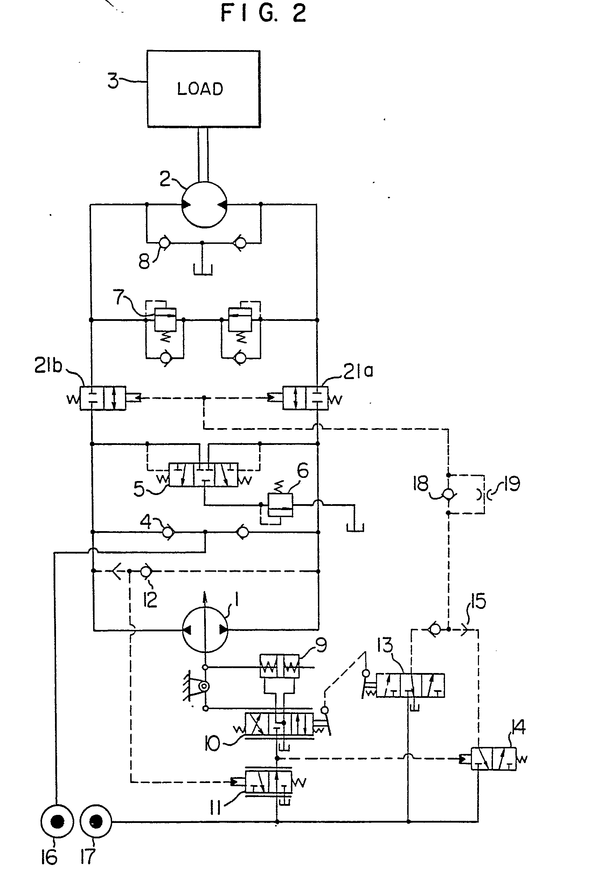

Fig. 2 shows a modification of the first embodiment in which parts similar to those shown in Fig. 1 are designated by like reference characters. In the modification shown, the motor stopping means for preventing the hydraulic motor 2 from rotating comprises on-off valves 21a and 21b mounted in the main lines connecting the pump 1 to the motor 2. The on-off valves 21a and 21b are connected to the pressure fluid source 17 through the check valve 18, shuttle valve 15 and directional control valves 13 and 14. Other parts of the modification are similar to those of the embodiment shown in Fig. 1. The cross-over relief valves 7 are located on the side of the hydraulic motor 2 with respect to the on-off valves 21a and 21b.

In the hydraulic power system of the aforesaid construction, in hydraulic motor acceleration operation, the hydraulic servo means is rendered operative as the operation lever of the servo valve 10 is actuated and at the same time a control pressure is supplied to the on-off valves 21a and 21b through the directional control valves 13, shuttle valve 15 and check valve 18, so that the on-off valves 21a and 21b allow the hydraulic fluid to flow through the main lines. In hydraulic motor deceleration operation, the control valve 11 effects control of the hydraulic fluid supply to the servo means to prevent the pressure in the main line on the suction side of the pump 1 from substantially exceeding the predetermined level, as is the case with the first embodiment. When the operation lever is returned to a neutral position, the directional control valve 13 returns to the position shown in Fig. 2 to communicate a line to the on-off valves 21a and 21b to reservoir. However, when the servo valve 10 is in the transient intermediate position and thus the motor 2 does not completely stop rotating, the directional control valve 14 is switched in response to a drop in the pressure on the output side of the control valve 11, so that a control pressure is supplied from the source 17 to the on-off valves 21a and 21b through the valve 14 and check valve 18. Thus the on-off valves 21a and 21b allow hydraulic fluid to flow through the main lines. When the servo valve 10 is brought to the neutral position, in which the pump 1 is in the neutral position and the pump 2 stops rotating, the on-off valves 21a and 21b are immediately actuated to prevent the hydraulic fluid to flow through the main lines, as shown in Fig. 2.

In the construction shown in Fig. 2 in which the on-off valves 21a and 21b serve as motor stopping means for preventing the hydraulic motor from rotating, the function of the motor stopping means may be inferior to that of the brake means 20 in arresting the actuation of the motor 2, however, the construction of Fig. 2 is much superior in motor arresting function to a construction in which the operation of the pump 1 alone is relied on for accomplishing the object and is equivalent to a construction using a counterbalancing valve in an open circuit. Also, by positioning the cross-over relief valves 7 on the side of the motor 2 with respect to the on-off valves 21a and 21b, it is possible to avoid damage to a power transmission system including the output shaft of the motor 2 and speed reducing gearing in case an inordinately large external force be exerted on the load because the cross-over relief valves 7 are actuated in such case.

It is to be understood that the neutral connection of the servo valve 10, the construction of the input means of the servo valve 10, the connection between the input means and the motor stopping means, the interlocking means for the input means and the directional control valve 13, and the construction of the directional control valves 21a and 21b are not limited to those as disclosed in Figs. 1 and 2. Also, the control valve 11 is not limited to the construction for controlling the flow rate of pressure fluid supplied to the servo motor 10 and may be constructed such that it is responsive to the pressure in the main lines for generating an output in the form of a controlled pressure or a controlled flow rate, so as to control the operation of the servo means by the output of the control valve.

From the foregoing, it will be appreciated that the embodiment of the hydraulic power system in conformity with the invention is provided with a control valve responsive to the pressure in the main lines of a closed hydraulic circuit for controlling a hydraulic fluid supply to the servo means to prevent the main line pressure from substantially exceeding a predetermined level, and control means responsive to the operation of the hydraulic servo means for releasing the motor stopping means from the operative position when the hydraulic servo means is under the operation thereof. By virtue of these features, it is possible to automatically cause the motor stopping means to be actuated to take its operative position as soon as the hydraulic motor stops rotating without need to mount a separate axcillary hydraulic motor used in the prior art, thereby contributing to simplification of the construction. Also, the need to mount a throttle valve in the main lines for detecting the condition of rotation of the hydraulic motor as in the case with the prior art is eliminated, and it is possible to avoid loss of power because the pressure at which the control valve is set is lower than the pressure at which the cross-over relief valves are set. Also, the need to detect the relieving condition of the cross-over relief valves is eliminated, and the need to use means for providing a time lag after the input means of the hydraulic servo means is restored to a neutral position until the time the motor stopping means is actuated is eliminated, so that it is possible to positively actuate the motor stopping means without being influenced by changes in the inertia of the load.

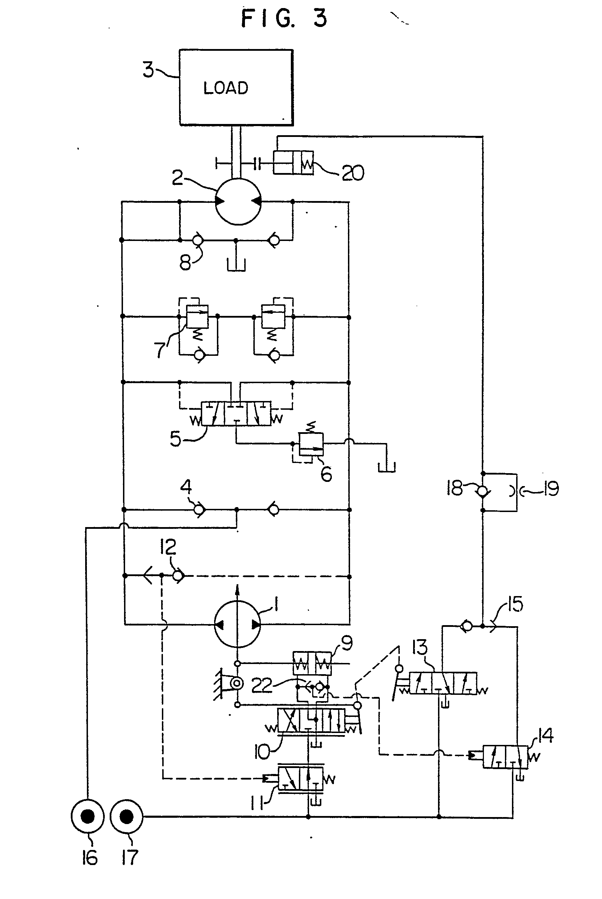

Fig. 3 is a circuit diagram of a second embodiment of the invention in which parts similar to those shown in Figs. 1 and 2 are designated by like reference characters.

In Fig. 3, a shuttle valve 22 is mounted in the hydraulic servo means for drawing off a higher pressure in lines interconnecting the servo cylinder 9 and servo valve 10, which pressure corresponds to the pressure of a hydraulic fluid on the output side of the servo valve 10. The directional control valve 14 is connected to the shuttle valve 22 to operate in response to a pressure on the output side of the servo valve 10.

In this embodiment, the directional control valve 13 constitutes, as is the case with the first embodiment shown in Fig. 1, first pressure transmission control means associated with the input means of the hydraulic servo means for transmitting a control pressure to the brake means 20 when the input means is actuated, and the directional control valve 14 and the shuttle valve 22 constitute second pressure transmission control means responsive to the operational pressure of a hydraulic fluid in the servo means on the output side of the servo valve 10 thereof for transmitting a control pressure to the brake means 20, when the operational pressure is substantially higher than a drain pressure or reservoir pressure. Thus the first and second pressure transmission control means constitute control means responsive to the operation of the servo means for releasing the motor stopping means from the operative position when the servo means is under the operation thereof.

In the hydraulic power system of the construction shown in Fig. 3, in hydraulic motor acceleration operation, the displacement volume of the hydraulic pump 1 is controlled by the servo means and the brake means 20 is released from the operative position by the directional control valve 13, and the pressure in the main line on the discharge side of the pump 1 is controlled by the control valve 11 so as not to substantially exceed the predetermined level, as is the first embodiment shown in Fig. 1.

In hydraulic motor decelerating operation, the pressure in the main line on the suction side of the pump 1 is controlled by the control valve 11 so as not to substantially exceed the predetermined level, as is the first embodiment shown in Fig. 1. When the operation lever of the servo valve 10 is restored to the neutral position, the directional control valve 13 interlocked thereto is also restored to the neutral position thereby to bring a line to the brake means 20 into communication with reservoir. However, at this time, the pressure on the suction side of the hydraulic pump 1 quickly rises and the control valve 11 is actuated, so that the servo valve 10 is prevented from quickly following up the operation lever and returning to the neutral position, and remains in a transient intermediate position. Stated differently, the tilting angle of the pump 1 is not suddenly returned to the neutral position. This brings the pressure on the output side of the servo valve 10 to a value intermediate between the pressure of a hydraulic fluid supply to the servo means from the hydraulic fluid source 17 which has been controlled by the control valve all and a drain pressure or reservoir pressure. The pressure on the output side of the servo valve 10 is drawn off through the shuttle valve 22 to actuate the directional control valve 14. Thus while the servo valve 10 is in the transient intermediate position, the brake means 20 is released from the operative position by receiving the control pressure from the valve 14. When the servo valve 10 is brought to the neutral position, in which the pump 1 is in the neutral position and the motor 2 substantially stops rotating, the directional control valve 14 is returned to the neutral position, and the brake means 20 is actuated to take the operative position since the directional control valve 13 is also in the the neutral position.

It will be noted that in the second embodiment of the hydraulic power system in conformity with the invention constructed as aforesaid, it is possible to release the brake means 20 from the operative position not only when the operation lever of the servo valve 10 is actuated but also until the motor 2 substantially stops rotating even after the operation lever is returned to the neutral position, and it is also possible to actuate the brake means 20 as soon as the motor 2 stops rotating, so that the brake means 20 is completely free from the influences of changes in the inertia of the load 3.

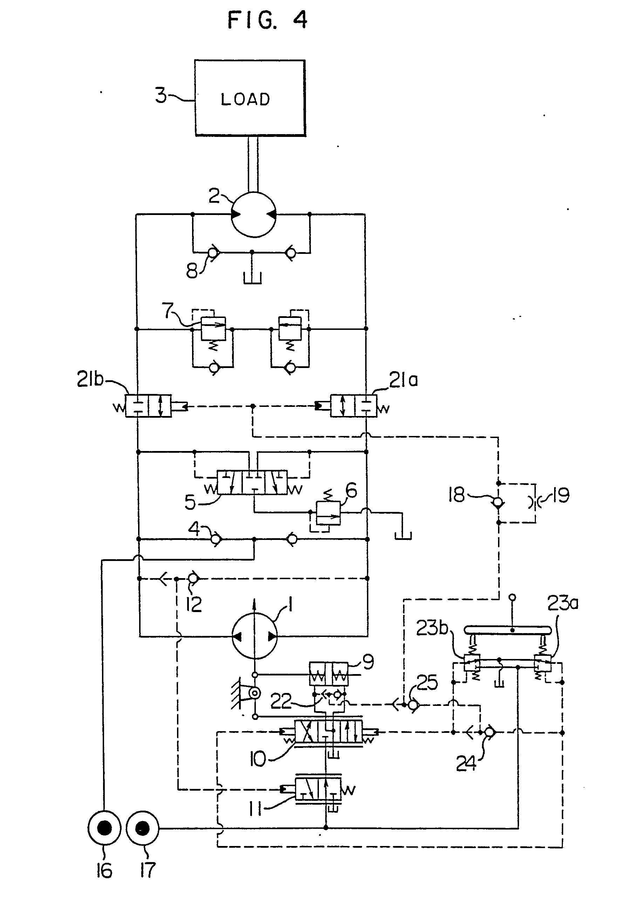

Fig. 4 is a circuit diagram of a modification of the second embodiment shown in Fig. 3, in which parts similar to those shown in Figs. 1—3 are designated by like reference characters. In the modification shown in Fig. 4, the on-off valves 21a and 21b mounted on the main lines interconnecting the pump 1 and motor 2 are used as motor stopping means for preventing the hydraulic motor from rotating, as is the case with the modification shown in Fig. 2. The input means of the servo valve 10 comprises a pair of pilot valves 23a and 23b operative to produce pilot pressures in accordance with the operated stroke of the operation lever for actuating the servo valve 10 by the pilot pressure. The pilot valves 23a and 23b are connected to a shuttle valve 24 for drawing of a higher pressure of the two pilot presures from the pilot valves 23a and 23b. The pilot valves 23a and 23b and the shuttle valve 24 are mounted on a line connecting the on-off valves 21 and 21b to the hydraulic fluid source 17. A shuttle valve 25 is also connected in the line for drawing off a higher pressure of the pressures from the shuttle valves 22 and 24 to actuate the on-off valves 21a and 21b. The shuttle valve 24 constitute first pressure transmission control means associated with the input means 23a and 23b of the hydraulic servo means for transmitting a control pressure to the brake means 21a and 21b when the input means are actuated. The shuttle valve 22 constitutes second pressure transmission control means responsive to the operational pressure on the output side of the servo valve 10 for transmitting a control pressure to the brake means 21a and 21b when the operational pressure is substantially higher than a drain pressure. When the servo valve 10 is restored to a neutral position, the control pressure fluid applied to the on-off valves 21a and 21b is drained to reservoir through the shuttle valve 22 and servo valve 10.

In the modification of the hydraulic power system of the aforesaid construction, in hydraulic motor acceleration operation, an actuation of the operation lever of the pilot valves 23a and 23b causes a control pressure to be supplied to the on-off valves 21a and 21b through the shuttle valves 24 and 25 and check valve 18. Thus the on-valves 21a and 21b are actuated to allow hydraulic fluid to flow through the main lines, and the pilot pressure produced by the pilot valves 23a and 23b acts on the servo valve 10 to actuate the hydraulic servo means. The pressure in the main line on the discharge side of the pump 1 is controlled by the control valve 11 not to substantially exceed the predetermined level, as is the case with the embodiment shown in Fig. 3.

In deceleration operation of the hydraulic motor 2, the pressure in the main line on the suction side of the pump 1 is controlled by the control valve 11 not to substantially exceed the predetermined level, as is the case with the embodiment shown in Fig. 3. Moreover, when the operation lever is returned to the neutral position, the pilot valves 23a and 23b are also restored to the condition shown in Fig. 4 to bring a line connected to the on-off valves 21a and 21b into communication with reservoir. However, while the servo valve 10 is in a transient intermediate position and the motor 2 does not completely stop rotating, a control pressure is supplied to the on-off valves 21a and 21b through the servo valve 10, shuttle valves 22 and 25 and check valve 18, so that the on-off valves 21a and 21b allow hydraulic fluid to flow through the main lines. When the servo valve 10 is restored to the neutral position, in which the pump 1 is in the neutral position and the motor stops rotating, the control pressure that has acted on the on-off valves 21a and 21b is drained to reservoir through the shuttle valve 22 and servo valve 10 immediately, so that the on-off valves 21a and 21b prevent hydraulic fluid from flowing through the main lines as shown in Fig. 4.

Although not shown, the construction shown in Fig. 4 may be further modified such that a directional control valve may be mounted between the shuttle valve 25 and the on-off valves 21a and 21b and actuated by a pressure from the shuttle valve 25 so as to actuate the on-off valves 21a and 21b by a pressure from the directional control valve.

It is to be understood that the neutral connection of the servo valve 10, the construction of the input means of the servo valve 10, the connection between the input means and the motor stopping means, and the connection between the input means and the output side of the servo valve 10 are not limited to those shown in Figs. 3 and 4. In Figs. 3 and 4, the servo valve 10 has been described as having the function of communicating its output side to reservoir when in a neutral position, however, the servo valve 10 is not limited to this construction, and may have other structures or circuit connections, providing that the pressure on the output side of the servo valve 10 is caused substantially to become a drain pressure when the servo valve 10 is neutral or the pump 1 is neutral.

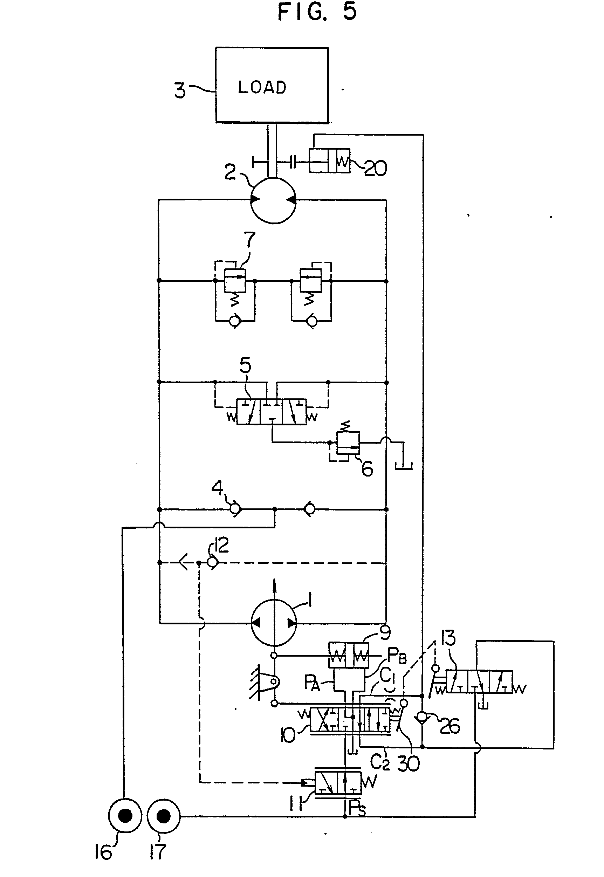

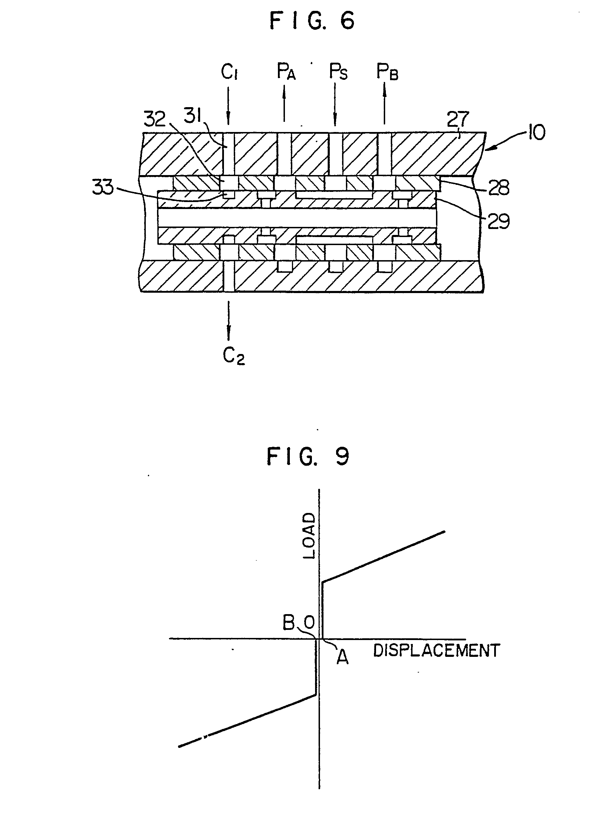

Fig. 5 is a circuit diagram showing a third embodiment in which parts similar to those shown in Figs. 1—4 are designated by like reference characters. In the embodiment shown, the servo valve 10 of the hydraulic servo means is interposed between lines $C_1$ and $C_2$ connected to a line communicating the brake means 20 to the hydraulic fluid source 17 and has incorporated therein on-off valve means responsive to the operation of the servo valve 10 for controlling the communication between the two lines $C_1$ and $C_2$. More specifically, the servo valve 10 is formed, as shown in Fig. 6, in a casing 27, a sleeve 28 and a spool 29 with ducts 31, 32 and 33 respectively for allowing the lines $C_1$ and $C_2$ to communicate with each other. The sleeve 28 and spool 29 are linked to the servo cylinder 9 and an operation lever 30 respectively. A check valve 26 is connected in parallel with the servo valve 10 between the directional control valve 13 and the brake means 20 in the line connecting the brake means 20 to the source 17 to allow hydraulic fluid to flow from the valve 13 to the brake means 20 but prevent its flow in the reverse direction.

As in the embodiment shown in Fig. 1, the directional control valve 13 constitutes first pressure transmission control means associated with the input means 30 of the hydraulic servo means for transmitting a control pressure to the brake means 20 when the input means 30 is actuated. The on-off valve means incorporated in the servo valve 10 as aforesaid constitutes second pressure transmission control means responsive to the actuation of the servo valve 10 for preventing the release of the control pressure received in the brake means 20 until the servo valve 10 is restored to a neutral position. Thus the first and second pressure transmission control means constitute control means responsive to the operation of the servo means for releasing the motor stopping means from the operative position when the servo means is under the operation thereof. When the servo valve 10 is restored to the neutral position, the control pressure applied to the brake means 20 is drained to reservoir through the on-off valve means incorporated in the servo valve 10 and the directional control valve 13.

In the hydraulic power system of this construction, in hydraulic motor acceleration operation, actuation of the operation lever 30 of the servo valve 10 causes the spool 29 shown in Fig. 6 to be displaced in accordance with the operated stroke of the operation lever 30, so that a hydraulic fluid $P_S$ from the hydraulic fluid source 17 is led to the servo valve 10, and a hydraulic fluid $P_A$ in the servo valve 10 is led to the servo cylinder 9 to vary the displacement volume of the hydraulic pump 1. At this time, the directional control valve 13 responsive to the actuation of the operation lever 30 of the servo valve 10 is switched so that the hydraulic fluid $P_S$ from the source 17 is led through the valve 13 and check valve 26 to the brake means 20 to release the latter from the operative position.

Also, the pressure in the main line on the discharge side of the pump 1 is controlled by the control valve 11 not to substantially exceed the predetermined level, as in the case with the embodiment shown in Fig. 1.

In hydraulic pump deceleration operation, the pressure in the main line on the suction side of the pump 1 is controlled by the control valve 11 not to substantially exceed the predetermined level, as is the case with the embodiment shown in Fig. 1.

When the operation lever 30 of the servo valve 10 is restored to a neutral position, the valve 13 interlocked thereto is also restored to a neutral position. However, at this time, the pressure on the suction side of the hydraulic pump 1 immediately rises to actuate the control valve 11. thus the servo valve 10 is prevented from following up the operation lever 30 and quickly returning to the neutral position, and maintained in a transient intermediate position. Stated differently, the tilting angle of the pump 1 is prevented from quickly moving to a neutral position. At this time, the lines $C_1$ and $C_2$ are blocked by the on-off valve means incorporated in the servo valve 10. Therefore, so long as the servo valve 10 is in the transient intermediate position, the control pressure received in the brake means 20 is prevented from releasing by the blocking of the servo valve 10 and check valve 26 and the brake means 20 can be kept released from the operative position. When the servo valve 10 is restored to the neutral position, in which the pump 1 is in the neutral position and the motor 2 substantially stops rotating, the directional control valve 13 is already in the neutral position and the lines $C_1$ and $C_2$ are brought into communication with each other through the casing 27, sleeve 28 and spool 29 of the servo valve 10, so that the control pressure received in the brake means 20 is drained to reservoir through the servo valve 10 and valve 13 to allow the brake means 20 to be actuated to take the operative position.

It will be noted that in the third embodiment of the hydraulic power system shown in Fig. 5 in conformity with the invention, it is possible to release the brake means 20 from the operative position not only when the operation valve 30 of the servo valve 10 is actuated but also until the hydraulic motor 2 substantially stops rotating even after the operation lever 30 is returned to the neutral position, and it is also possible to actuate the brake means 20 as soon as the motor 2 stops rotating, so that the brake means 20 is completely free from the influences that might otherwise be exerted thereon by changes in the inertia of the load.

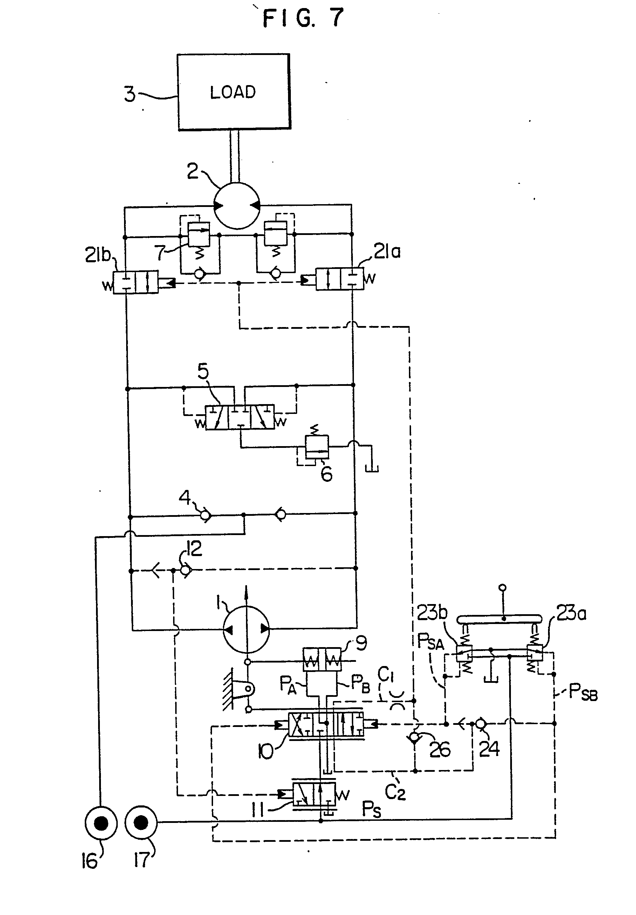

Fig. 7 is a circuit diagram showing a modification of the third embodiment shown in Fig. 5, in which parts similar to those shown in Figs. 1—6 are designated by like reference characters. In the modification shown in Fig. 7, the on-off valves 21 and 21b mounted in the main lines connecting the pump 1 and motor 2 are used as motor stopping means for preventing the hydraulic motor 2 from rotating, as in the modification of the first embodiment shown in Fig. 2. The pilot valves 23a and 23b operative to produce pilot pressures in accordance with the operated stroke of the operation lever for actuating the servo valve 10 by the pilot pressure are used as input means of the servo valve 10, as is the case with the modification shown in Fig. 4. The pilot pressure from the pilot valves 23a or 23b are drawn off by the shuttle valve 24. The pilot valves 23a and 23b and the shuttle valve 24 are connected in a line connecting the on-off valves 21a and 21b to the hydraulic fluid source 17. The servo valve 10 is of the same construction as the servo valve 10 shown in Fig. 5. More specifically, the servo valve 10 is interposed between the lines $C_1$ and $C_2$ connected to the line connecting the on-off valves 21a and 21b to the source 17, and the servo valve 10 has incorporated therein on-off valve means responsive to the actuation of the servo valve 10 for bringing the lines $C_1$ and $C_2$ into communication with each other only when both the hydraulic servo means and the operation lever are in a neutral position. The check valve 26 is connected in parallel with the servo valve 10 between the pilot valves 23a and 23b and the on-off valves 21a and 21b in the line connecting the on-off valves 21a and 21b to the source 17, to allow hydraulic fluid to flow from the pilot valves 23a and 23b to the on-off valves 21a and 21b but prevent the flowing in the reverse direction.

The shuttle valve 24 constitutes first pressure transmission control means associated with the input means 23a and 23b of the hydraulic servo means for transmitting a control pressure to the brake means 21a and 21b when the input means 23a and 23b are actuated. The on-off valve means incorporated in the servo valve 10 as described hereinabove constitutes second pressure transmission control means responsive to the actuation of the servo valve 10 for preventing the release of the control pressure received in the on-off valves 21a and 21b until the servo valve 10 is restored to a neutral position. When the servo valve 10 is restored to the neutral position, the control pressure applied to the on-off valves 21a and 21b is drained to reservoir through the on-off valve means incorporated in the servo valve 10, shuttle valve 24 and pilot valves 21a and 21b.

In the hydraulic power system of this construction, in hydraulic motor acceleration operation, actuation of the operation lever of the pilot valves 23a and 23b causes an output pressure $P_{SA}$ or $P_{SB}$ of the pilot valve 23a or 23b to be supplied from the source 17 through the check valve 26 to the on-off valves 21a and 21b, so that the on-off valves 21a and 21b allow hydraulic fluid to flow through the main lines. Also, an output pressure of the pilot valve 23a or 23b acts on the servo valve 10 to operate the hydraulic servo means. In hydraulic motor deceleration operation, the pressure in the main line on the suction side of the pump 1 is controlled by the control valve 11 not to substantially exceed the predetermined level, in the same manner as described by referring to the embodiment shown in Fig. 5. When the operation lever is restored to a neutral position, the pilot valve 23a or 23b is returned to the position shown in Fig. 7 to bring the line to the on-off valves 21a and 21b into communication with reservoir. However, so long as the servo valve 10 is in a transient intermediate position and the motor 2 does not completely stop rotating, the control pressure received in the on-off valves 21a and 21b is prevented from draining by the on-off valve means incorporated in the servo valve 10 and the check valve 26, so that the on-off valves 21a and 21b allow hydraulic fluid to flow through the main lines. When the servo valve 10 is brought to the neutral position, in which the pump 2 is in the neutral position and the motor completely stops rotating, the lines $C_1$ and $C_2$ are brought into communication with each other to allow the control pressure for the on-off valves 21a and 21b to be drained to reservoir through the servo valve 10, the shuttle valve 24 and the pilot valves 23a and 23b. Thus the flow of the pressure fluid through the main lines is interrupted as shown in Fig. 7.

It will be noted that the construction of the input means of the servo valve 10, the neutral connection of the servo valve 10 and the connection between the input means and the motor stopping means are not limited to those shown in Figs. 5 to 7. Particularly, in Figs. 5 to 7, the servo valve 10 is shown as having the function of communicating its output side to reservoir when in a neutral position, however, the servo valve 10 is not limited to this specific construction, and may have other structures or circuit connections, providing that the pressure on the output side of the servo valve 10 is caused substantially to become a drain pressure when the servo valve 10 is neutral or the hydraulic pump 1 is neutral.

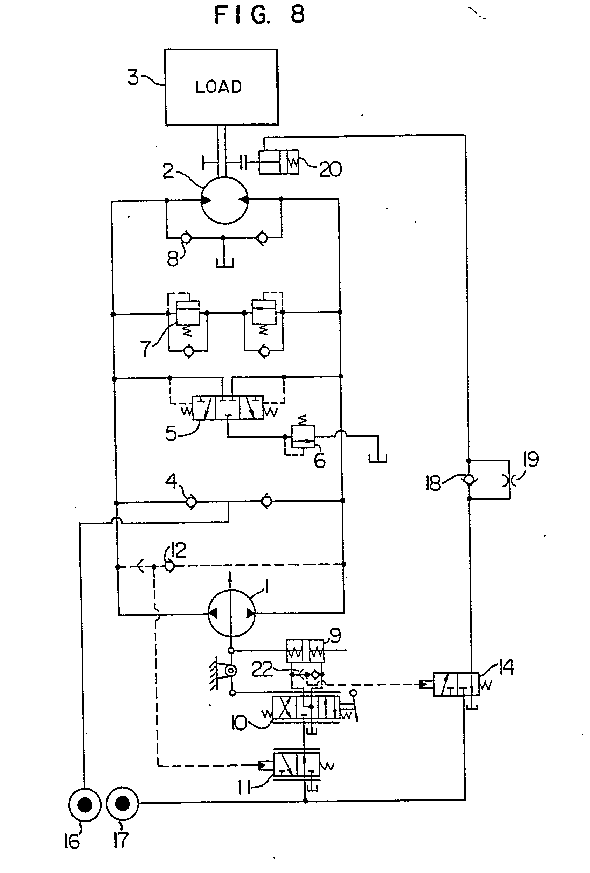

Fig. 8 is a circuit diagram showing the construction of a fourth embodiment of the invention, in which parts similar to those shown in Figs. 1—7 are designated by like reference characters.

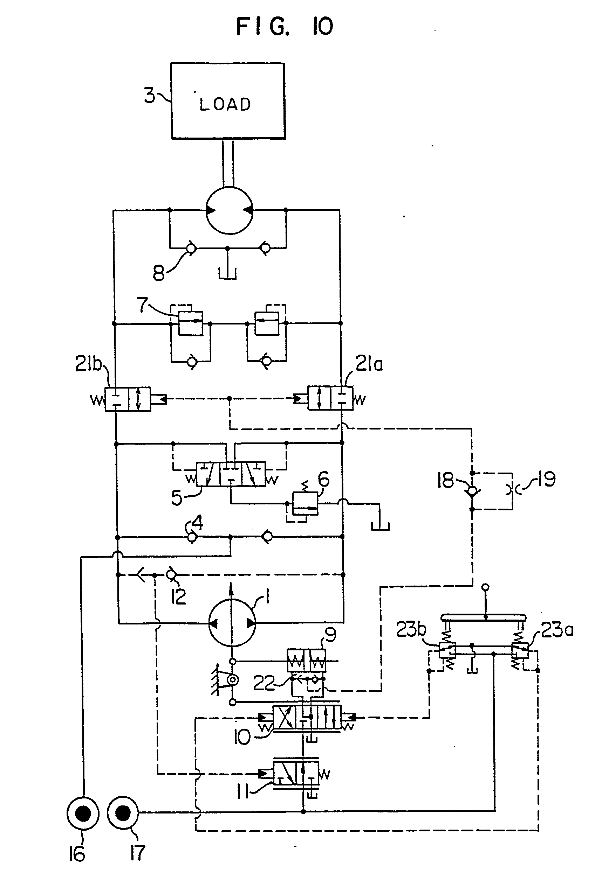

As shown, the servo cylinder 9 of the hydraulic servo means actuates a displacement volume control member of the variable displacement hydraulic pump 1 and is provided with reaction imparting means (hereinafter referred to as spring means) for imparting a reaction to cause a load which be reduced in the vicinity of a neutral position as shown in Fig. 9 at A and B. The shuttle valve 22 draws off a higher pressure from lines interconnecting the servo cylinder 9 and servo valve 10, which pressure corresponds to a pressure on the output side of the servo valve 10. The directional control valve 14 is connected to the shuttle valve 22 to operate in response to the pressure on the output side of the servo valve 10. The valve 14 is connected in a line connecting the brake means 20 to the hydraulic fluid source 17.

The shuttle valve 22 and change-over valve 14 constitute pressure transmission control means responsive to the operational pressure of a hydraulic fluid on the output side of the servo valve 10 of the hydraulic servo means for transmitting a control pressure to the brake means 20 when the operational pressure is substantially higher than a drain pressure. Thus the pressure transmission control means constitutes control means responsive to the operation of the hydraulic servo means for releasing the motor stopping means from the operative position when the hydraulic servo means is under the operation thereof.

In the hydraulic power system of the aforesaid construction, in hydraulic motor acceleration operation, actuation of the operation lever of the servo valve 10 causes the displacement volume of the hydraulic pump 1 to be adjusted by the hydraulic servo means while the pressure in the main line on the discharge side of the pump 1 is controlled by the control valve 11 not to substantially exceed the predetermined level. At this time, the directional control valve 14 is switched by the operational pressure on the output side of the servo valve 10 drawn off by the shuttle valve 22, so that a control pressure is led from the source 17 to the brake means 20 through the valve 14 and check valve 18 to release the brake means 20 from the operative position.

When the servo cylinder 9 is displaced in an amount commensurate with the operated stroke of the operation lever of the servo valve 10, the spring means in the servo cylinder 9 produces a load which is commensurate with the displacement as shown in Fig. 9. This causes a reaction corresponding to the load to be generated on the output side of the servo motor, so that the directional control valve 14 is kept in the switched position to release the brake means 20 from the operative position.

In hydraulic motor deceleration operation, the pressure in the main line on the suction side of the pump 1 is controlled by the control valve 11 not to substantially exceed the predetermined level, as is the case with the embodiment shown in Fig. 1.

When the operation lever of the servo valve 10 is restored to a neutral position, an operation substantially similar to the operation described by referring to the embodiment shown in Fig. 3 is performed. More specifically, the pressure on the suction side of the hydraulic pump 1 quickly rises and the control valve 11 is actuated, so that the servo valve 10 is prevented from quickly following up the operation lever and returning to the neutral position, and maintained in a transient intermediate position. Thus the tilting angle of the pump 1 is prevented from immediately returning to the neutral position. Thus the pressure on the output side of the servo valve 10 has a value intermediate between the pressure of a hydraulic fluid supply to the servo means which has been controlled by the control valve and a drain pressure. The pressure of this value is drawn off through the shuttle valve 22 to actuate the directional control valve 14. Thus while the servo valve 10 remains in the transient intermediate position, it is possible to keep releasing the brake means 20 from the operative position by a control pressure from the valve 14. When the servo valve 10 is brought to the neutral position, in which the pump 1 is in the neutral position and the motor 2 substantially stops rotating, the load applied by the spring means is reduced in value and the pressure on the output side of the servo valve 10 is reduced to restore the valve 14 to the neutral position. Thus the brake means 20 is actuated to take the operative position.

It will be noted that in the fourth embodiment of the hydraulic power system in conformity with the invention, it is possible to release the brake means 20 from the operative position not only when the operation lever of the servo valve 10 is actuated but also until the motor 2 substantially stops rotating even after the operation lever is returned to the neutral position, and it is also possible to actuate the brake means 20 as soon as the motor 2 stops rotating, so that the brake means 20 is completely free from the influences which might otherwise be exerted thereon by changes in the inertia of the load.

Fig. 10 is a circuit diagram showing a modification of the fourth embodiment, in which parts similar to those shown in Figs. 1—8 are designated by like reference characters. In this modification, the on-off valves 21a and 21b mounted on the main lines connecting the pump 1 to the motor 2 are used as motor stopping means for preventing the motor 2 from rotating, as is the case with the modification shown in Fig. 2. The pilot valves 23a and 23b operative to generate pilot pressures in accordance with the operated stroke of the operation lever for actuating the servo valve 10 by this pilot pressure are used as input means of the servo valve 10, as is the case with the modification shown in Fig. 4. The shuttle valve 22 draws off the operational pressure on the output side of the servo valve 10 of the hydraulic servo means and transmits it to the on-off valves 21a and 21b. Thus the shuttle valve 22 constitutes pressure transmission control means responsive to the operational pressure of a hydraulic fluid on the output side of the servo valve 10 of the hydraulic servo means for transmitting a control pressure to the on-off valves 21a and 21b when the pressure is substantially higher than a drain pressure.

In the hydraulic power system of the construction shown in Fig. 10, in hydraulic motor acceleration operation, actuation of the operation lever of the pilot valves 23a and 23b renders the servo valve 10 operative, and an operational pressure produced on the output side of the servo valve 10 is transmitted through the shuttle valve 22 and check valve 18 to the on-off valves 23a and 23b, so that the on-off valves 21a and 21b allow hydraulic fluid to flow through the main lines. Also, the pressure in the main line on the discharge side of the pump 1 is controlled not to substantially exceed the predetermined level, as is the case with the embodiment shown in Fig. 8. In hydraulic motor deceleration operation, the pressure in the main line on the suction side of the pump 1 is controlled not to substantially exceed the predetermined level, as is the case with the embodiment shown in Fig. 8. When the operation lever is restored to a neutral position, the pilot valves 23a and 23b are restored to the position shown in Fig. 10. However, while the servo valve 10 remains in a transient intermediate position and the motor 2 does not completely stop rotating, the operational pressure on the output side of the servo valve 10 continues to act on the on-off valves 21a and 21b through the shuttle valve 22 and check valve 18, so that the on-off valves 21a and 21b allow hydraulic fluid to flow through the main lines. When the servo valve 10 is brought to the neutral position, in which the pump 1 is in the neutral position and the motor stops rotating, the on-off valves 21a and 21b are immediately actuated to prevent hydraulic fluid from flowing through the main lines, as shown in Fig. 10.

It will be noted that the neutral connection of the servo valve 10, the construction of the input means of the servo valve 10, the connection between the output side of the servo valve 10 and the motor stopping means, and the characteristics of the spring means are not limited to those described in the embodiments shown in Figs. 8—10, and they may comprise other structures or circuit connections providing that the motor stopping means is released from the operative position when the servo means is under operation, and the motor stopping means is actuated to take the operative position when the servo motor 10 is in a neutral position or when the hydraulic pump 1 is in a neutral position.

It will be also noted that it is not essential that the reaction imparting means is mounted in the servo cylinder 9, and such means has only to be maintained in engagement with an operation member for adjusting the displacement volume of the pump 1 or a connecting member coupled to such operation member.

From the foregoing, it will be appreciated that in the second, third and fourth embodiments of the hydraulic power system in conformity with the invention, as in the first embodiment shown in Fig. 1, there are provided a control valve responsive to a main line pressure in the closed circuit for controlling a hydraulic fluid supply to the hydraulic servo means to prevent the main line pressure from substantially exceeding a predetermined level, and control means responsive to the operation of the hydraulic servo means for releasing the motor stopping means from the operative position when the servo means is under the operation thereof. By virtue of these features, it is possible to automatically cause the motor stopping means to be actuated to take the operative position immediately after the hydraulic motor stops rotating without need to mount a separate ancillary hydraulic motor used in the prior art, thereby contributing to simplification of the construction. Also, the need to mount a throttle valve in the main lines for detecting the condition of rotation of the hydraulic motor as is the case with the prior art is eliminated, and it is possible to avoid a loss of power because the pressure at which the control valve is set is lower than the pressure at which the cross-over relief valves are set. Also, the need to detect the relieving condition of the cross-over relief valves is eliminated, and the need to use means for providing a time lag after the input means is restored to a neutral position until the motor stopping means is actuated is eliminated, so that it is possible to positively actuate the motor stopping means without being influenced by changes in the inertia of the load.

## Claims

1. A hydraulic power system comprising a variable displacement hydraulic pump (1), a hydraulic motor (2) driven by said hydraulic pump for actuating a load (3) of relatively large inertia, said pump and motor being connected to constitute a closed hydraulic circuit, hydraulic servo means (9, 10) operated by a hydraulic fluid supplied through a fluid supply line from a hydraulic fluid source for controlling the displacement volume of said pump in accordance with an operation of input means, and pressure control valve means (11) connected in said fluid supply line and responsive to a main line pressure in said closed hydraulic circuit for reducing the supply of said hydraulic fluid to said servo means so as to prevent said main line pressure from exceeding a predetermined level when the main line pressure increases due to the inertia of the load, characterized by:

motor stopping means (20; 21a and 21b) associated with said motor (2) for holding said motor (2) unrotatable when said motor stopping means is in an operative position;

first control means (13; 24 and 25; 13 and 26; 24 and 26; 14 and 22; 22) responsive to the operation of said input means for the servo means (9 and 10) for enabling said motor stopping means to be released from the operative position when said input means is operated to initiate and continue rotation of said motor;

means including said servo means (9 and 10) and said pressure control valve means (11) for matching said main line pressure to hydraulically detect the condition of rotation of said motor (2) and generating a signal indicative of rotation of said motor when said input means is operated to return to its neutral position, said motor rotation signal comprising a change in condition caused by the operations of said servo means and pressure control valve means in combination; and

second control means (14; 14 and 22; 22 and 25; 10, C1 and C2; 14 and 22; 22) responsive to said motor rotation signal for enabling said motor stopping means to be released from the operative position whereby said motor stopping means is kept released from the operative position when said motor is still caused to rotate due to the inertia of said load (3) after said input means is operated to return to its neutral position, while it is brought into the operative position in the absence of said motor rotation signal when said motor completely ceases to rotate.

2. A hydraulic power system as claimed in claim 1, wherein said motor stopping means comprises brake means (20; 21a and 21b) adapted to release the motor (2) from a braked condition when a control pressure from a hydraulic fluid source (17) is received, and said first and second control means comprises first and second pressure transmission control means responsive to the operation of said input means and motor rotation signal, respectively, for transmitting said control pressure to said brake means.

3. A hydraulic power system as claimed in claim 2, wherein said brake means comprises a brake cylinder (20) for applying the brake force to an output shaft of said hydraulic motor (2).

4. A hydraulic power system as claimed in claim 2, wherein said brake means comprises on-off valves (21a and 21b) mounted in main lines of the closed hydraulic circuit.

5. A hydraulic power system as claimed in claim 1, wherein said motor stopping means comprises brake means (20; 21a and 21b) adapted to release the motor (2) from a braked condition when a control pressure from a hydraulic fluid source (17) is received, and said first control means comprises first pressure transmission control means (13) interlocked with input means of said servo means (9 and 10) for transmitting said control pressure to said brake means when said input means is actuated, and said second control means comprises second pressure transmission control means (14) responsive to the pressure of a hydraulic fluid supply to said servo means on the output side of the control valve (11) for transmitting said control pressure to said brake means when said supply pressure becomes substantially lower than a normal supply pressure of the hydraulic fluid source upon operation of said control valve (11).

6. A hydraulic power system as claimed in claim 5, wherein said first pressure transmission control means comprises a first directional control valve (13) interlocked with said input means of said servo means (9 and 10), said second pressure transmission control means comprises a second directional control valve (14) connected in parallel with said first directional control valve (13) and actuated by said pressure of the hydraulic fluid supply to said servo means.

7. A hydraulic power system as claimed in claim 6, further comprising line means for transmitting said control pressure therethrough to said brake means (20; 21a and 21b), and a shuttle valve (15) connected to said line means for selecting, as said control pressure, a higher pressure of the pressures from said first and second directional control valves (13 and 14), and said first and second directional control valves allow said line means to be communicated with a drain when they are not actuated.

8. A hydraulic power system as claimed in claim 1, wherein said motor stopping means comprises brake means (20; 21a and 21b) adapted to release the motor (2) from a braked condition when a control pressure from a hydraulic fluid source (17) is received, and said first control means comprises first pressure transmission control means (13; 24) associated with input means of said servo means (9 and 10) for transmitting said control pressure to said brake means when said input means is actuated, and said second control means comprises second pressure transmission control means (14 and 22; 22) responsive to the operational pressure of a hydraulic fluid in said servo means on the output side of a servo valve (10) thereof for transmitting said control pressure to said brake means when said operational pressure is substantially higher than a drain pressure.

9. A hydraulic power system as claimed in claim 8, wherein said first pressure transmission control means comprises a first directional control valve (13) interlocked with said input means of said servo means, and said second pressure transmission control means comprises a shuttle valve (22) for drawing off said operational pressure on the output side of said servo valve (10), and a second directional control valve (14) connected in parallel with said first directional control valve (13) and actuated by said operational pressure drawn off through said shuttle valve.

10. A hydraulic power system as claimed in claim 9, further comprising line means for transmitting said control pressure therethrough to said brake means (20), and a shuttle valve (15) connected to said line means for selecting, as said control pressure, a higher pressure of the pressures from said first and second directional control valves (13 and 14), and said first and second directional control valves allows said line means to be communicated with a drain when they are not actuated.

11. A hydraulic power system as claimed in claim 8, wherein said input means of said servo means (9 and 10) comprises a pair of pilot valves (23a and 23b), said first pressure transmission control means comprises a first shuttle valve (24) for drawing off a higher pressure of the pilot pressures from said pair of pilot valves, and said second pressure transmission control means comprises a second shuttle valve (22) for drawing off said operational pressure on the output side of said servo valve (10).

12. A hydraulic power system as claimed in claim 11, further comprising line means for transmitting said control pressure therethrough to said brake means (21a and 21b), and a third shuttle means (25) connected to said line means for selecting, as said control pressure, a higher pressure of the pressures from said first and second shuttle valves (24 and 22).

13. A hydraulic power system as claimed in claim 1, wherein said motor stopping means comprises brake means (20; 21a and 21b) adapted to release said motor (2) from a braked condition when a control pressure from a hydraulic fluid source (17) is received, and said first control means comprises first pressure transmission control means (13; 24) associated with input means of said servo means (9 and 10) for transmitting said control pressure to said brake means when said input means is actuated, and said second control means comprises second pressure transmission control means (10, 32 and 33) responsive to the actuation of a servo valve (10) of said servo means for preventing the release of said control pressure received in said brake means until said servo valve is restored to a neutral position.

14. A hydraulic power transmission system as claimed in claim 13, wherein said first pressure transmission control means comprises a directional control valve (13) interlocked with said input means of said servo means (9 and 10), and said second pressure transmission control means comprises on-off valve means (32 and 33) incorporated in said servo valve (10).

15. A hydraulic power system as claimed in claim 14, further comprising line means for transmitting said control pressure therethrough to said brake means (20), and a check valve (26) connected to said line means in parallel with said on-off valve means (32 and 33) for preventing said control pressure from returning to said directional control valve (13).

16. A hydraulic power system as claimed in claim 13, wherein said input means of said servo means (9 and 10) comprises a pair of pilot valves (23a and 23b), said first pressure transmission control means comprises a shuttle valve (24) for drawing off a higher pressure of the pilot pressures from said pair of pilot valves, and said second pressure transmission control means comprises on-off valves (32 and 33) means incorporated in said servo valve (10).

17. A hydraulic power system as claimed in claim 16, further comprising line means for transmitting said control pressure therethrough to said brake means (21a and 21b), and a check valve (26) connected to said line means in parallel with said on-off valve means (32 and 33) for preventing said control pressure from returning to said shuttle valve (24).

18. A hydraulic power system as claimed in claim 1, wherein said motor stopping means comprises brake means (20; 21a and 21b) adapted to release said motor (2) from a braked condition when a control pressure from a pressure fluid source (17) is received, and said first and second control means comprises common pressure transmission control means (14 and 22; 22) responsive to the operational pressure of a hydraulic fluid in said servo means (9 and 10) on the output side of a servo valve (10) thereof for transmitting said control pressure to said brake means when said operational pressure is substantially higher than a drain pressure.

19. A hydraulic power system as claimed in claim 18, wherein said first and second control means further comprises reaction imparting means mounted in said hydraulic servo means (9) for causing a sufficiently higher operational pressure to be generated on the output side of said servo valve (10) when said servo means is displaced from a neutral position.

20. A hydraulic power system as claimed in claim 19, wherein said reaction imparting means comprises spring means mounted in a servo cylinder (9) of said servo means.

21. A hydraulic power system as claimed in claim 18, wherein said pressure transmission control means comprises a shuttle valve (22) for drawing off said operational pressure on the output side of said servo valve (10), and a directional control valve (14) actuated by said operational pressure drawn off through said shuttle valve.

22. A hydraulic power system as claimed in claim 18, wherein said pressure transmission control means comprises a shuttle valve (22) for drawing off said operational pressure on the output side of said servo valve (10) for using it as said control pressure.

**Revendications**

1. Dispositif de commande hydraulique comprenant une pompe hydraulique (1) à déplacement variable, un moteur hydraulique (2) entraîné par cette pompe hydraulique pour manoeuvrer une charge (3) dotée d'une inertie relativement élevée, la pompe et le moteur étant accouplés de façon à constituer un circuit hydraulique fermé, un moyen hydraulique (9, 10 asservi, actionné par un fluide hydraulique amené par une canalisation d'alimentation en fluide provenant d'une source de fluide hydraulique dans le but de régler le volume du déplacement de la pompe en accord avec le fonctionnement d'un moyen d'admission, et un moyen (11) formant vanne de réglage de la pression, branché sur la canalisation d'alimentation en fluide et sensible à une pression de la canalisation principale dans le circuit hydraulique fermé afin de réduire le débit du fluide hydraulique fourni au moyen asservi de façon à empêcher que la pression dans la canalisation principale ne dépasse un niveau prédéterminé lorsque la pression dans la canalisation principale augmente du fait de l'inertie de la charge, caractérisé en ce qu'il comprend:

un moyen (20, 21a et 21b) d'arrêt du moteur, associé à ce moteur (2) pour maintenir le moteur (2) à l'arrêt lorsque le moyen d'arrêt du moteur est en position de fonctionnement;

un premier moyen de réglage (13, 24 et 25; 13 et 26; 24 et 26; 14 et 22; 22) sensible au fontionnement du moyen d'admission au moyen asservi (9 et 10) pour permettre au moyen d'arrêt du moteur d'être libéré de la position de fonctionnement lorsque le moyen d'admission est manoeuvré pour démarrer et poursuivre la rotation du moteur;

un moyen comprenant le moyen asservi (9 et 10) et le moyen (11) formant vanne de réglage de la pression pour harmoniser la pression de la canalisation principale en vue de détecter hydrauliquement l'état de rotation du moteur (2) et pour engendrer un signal indicateur de la rotation du moteur lorsque le moyen d'admission est manoeuvré pour revenir à son point mort, le signal de rotation du moteur comprenant un changement de condition causé par les fonctionnements combinés du moyen asservi et du moyen formant vanne de réglage de la pression; et

un second moyen de réglage (14; 14 et 22; 22 et 25; 10, $C_1$ et $C_2$; 14 et 22; 22) sensible au signal de rotation du moteur pour permettre au moyen d'arrêt du moteur d'être libéré de sa position de fonctionnement, moyennant quoi le moyen d'arrêt du moteur est maintenu libéré de la position de fonctionnement lorsque le moteur est encore entraîné dans un mouvement de rotation du fait de l'inertie de la charge (3) après la mise en action du moyen d'admission pour le ramener à son point mort, tandis qu'il est amené à la position de fonctionnement en l'absence du signal de rotation du moteur lorsque ce dernier a complètement cessé de tourner.

2. Dispositif de commande hydraulique suivant la revendication 1, dans lequel le moyen d'arrêt du moteur comprend un moyen (20; 21a et 21b) de freinage prévu pour libérer le moteur (2) d'un état de freinage lorsqu'une pression de réglage émanant d'une source (17) de fluide hydraulique y est reçue, et les premier et second moyens de réglage comprennent un premier et un second moyens de commande de transmission de pression sensibles respectivement au fonctionnement du moyen d'admission et au signal de rotation du moteur, pour transmettre la pression de réglage au moyen de freinage.

3. Dispositif de commande hydraulique suivant la revendication 2, dans lequel le moyen de freinage comprend un cylindre (20) à frein pour appliquer la force de freinage à un arbre de sortie du moteur hydraulique (2).

4. Dispositif de commande hydraulique suivant la revendication 2, dans lequel le moyen de freinage comprend des vannes (21a et 21b) de réglage par tout ou rien, montés dans les canalisations principales du circuit hydraulique fermé.

5. Dispositif de commande hydraulique suivant la revendication 1, dans lequel le moyen d'arrêt du moteur comprend un moyen (20; 21a et 21b) de freinage prévu pour libérer le moteur (2) d'un état de freinage lorsqu'une pression de réglage émanant d'une source (17) de fluide hydraulique y est reçue, et dans lequel le premier moyen de réglage comprend un premier moyen (13) de commande de transmission de pression associé au moyen d'admission du moyen asservi (9 et 10) pour transmettre la pression de réglage au moyen de freinage lorsque le moyen d'admission est actionné, et dans lequel le second moyen de réglage comprend un second moyen (14) de commande de transmission de pression, sensible à la pression d'un fluide hydraulique d'alimentation du moyen asservi du côté sortie de la vanne (11) de réglage pour transmettre la pression de réglage au moyen de freinage lorsque la pression d'alimentation devient sensiblement plus faible qu'une pression normale d'alimentation venant de la source de fluide hydraulique par l'effet de la mise en action de la vanne (11) de réglage.

6. Dispositif de commande hydraulique suivant la revendication 5, dans lequel le premier moyen de commande de transmission de pression comprend une première vanne (13) de distribution interverrouillée avec le moyen d'admission du moyen asservi (9 et 10), et dans lequel le second moyen de commande de transmission de pression comprend une seconde vanne (14) de distribution montée en parallèle avec la première vanne (13) de distribution et commandée par la pression du fluide hydraulique alimentant le moyen asservi.

7. Dispositif de commande hydraulique suivant la revendication 6, comprenant en outre un moyen formant canalisation pour transmetre la pression de réglage au moyen (20; 21a et 21b) de freinage, et une vanne sélectrice (15) reliée au moyen formant canalisation pour choisir, comme pression de réglage, la plus élevée des pressions provenant des première et seconde vannes (13 et 14) de distribution, et dans lequel les première et seconde vannes de distribution permettent de mettre le moyen formant canalisation en communication avec une purge lorsqu'elles ne sont pas actionnées.

8. Dispositif de commande hydraulique suivant la revendication 1, dans lequel le moyen d'arrêt du moteur comprend un moyen (20; 21a et 21b) de freinage prévu pour libérer le moteur (2) d'une état de freinage lorsqu'une pression de réglage émanant d'une source (17) de fluide hydraulique y est reçue, et dans lequel le premier moyen de réglage comprend un premier moyen (13; 24) de commande de transmission de pression associé au moyen d'admission du moyen asservi (9 et 10), pour transmettre la pression de réglage au moyen de freinage lorsque le moyen d'admission est actionné, et dans lequel le second moyen de réglage comprend un second moyen (14 et 22; 22) de commande de transmission de pression, sensible à la pression de fonctionnement d'une fluide hydraulique d'alimentation du moyen asservi du côté sortie de la vanne (10) asservie pour transmettre la pression de réglage au moyen de freinage quand la pression de fonctionnement est sensiblement plus élevée qu'une pression de purge.

9. Dispositif de commande hydraulique suivant la revendication 8, dans lequel le premier moyen de commande de la transmission de pression comprend une première vanne (13) de distribution interverrouillée avec le moyen d'admission du moyen asservi, et dans lequel le second moyen de commande de la transmission de pression comprend une vanne sélectrice (22) pour soutirer la pression de fonctionnement du côté sortie de la vanne asservie (10), et une seconde vanne (14) de distribution montée en parallèle avec la première vanne (13) de distribution et commandée par la pression de fonctionnement soutirée par l'intermédiaire de la vanne sélectrice.

10. Dispositif de commande hydraulique suivant la revendication 9, comprenant en outre un moyen formant canalisation pour transmettre la pression de réglage au moyen (20) de freinage, et une vanne sélective (15) reliée au moyen formant canalisation pour choisir, comme pression de réglage, la plus élevée des pressions provenant des première et seconde vannes (13 et 14) de distribution, et dans lequel les première et seconde vannes de distribution permettent de mettre le moyen formant canalisation en communication avec une purge lorsqu'elles ne sont pas actionnées.

11. Dispositif de commande hydraulique suivant la revendication 8, dans lequel le moyen d'admission au moyen asservi (9 et 10) comprend une paire de vannes-pilotes (23a et 23b), le premier moyen de commande de transmission de pression comprend une première vanne sélectrice (24) pour soutirer la plus élevée des pressions des pressions venant de la paire de vannes-pilotes, et dans lequel le second moyen de commande de transmission de pression comprend une seconde vanne sélectrice (22) pour soutirer la pression de fonctionnement du côté sortie de la vanne asservie (10).

12. Dispositif de commande hydraulique suivant la revendication 11, comprenant en outre un moyen formant canalisation pour transmettre la pression de réglage au moyen (21a et 21b) de freinage, et un troisième moyen de sélecteur (25) relié au moyen formant canalisation pour choisir, comme pression de réglage, la plus élevée des pressions des première et seconde vannes sélectrices (24 et 22).

13. Dispositif de commande hydraulique suivant la revendication 1, dans lequel le moyen d'arrêt du moteur comprend un moyen (20; 21a et 21b) de freinage prévu pour libérer le moteur (2) de son état de freinage lorsqu'une pression de réglage émanant d'une source (17) de fluide hydraulique y est reçue, et dans lequel le premier moyen de réglage comprend un premier moyen (13; 14) de commande de transmission de pression associé au moyen d'admission du moyen asservi (9 et 10) pour transmettre la pression de réglage au moyen de freinage lorsque le moyen d'admission est actionné, et dans lequel le second moyen de réglage comprend un second moyen (10, 32 et 33) de commande de transmission de pression sensible à la commande d'une vanne asservie (10) du moyen asservi pour empêcher la libération de la pression de réglage reçue dans le moyen de freinage jusqu'au moment où la vanne asservie est ramenée à son point mort.

14. Dispositif de commande hydraulique suivant la revendication 13, dans lequel le premier moyen de commande de transmission de pression comprend une vanne (13) de distribution interverrouillée avec le moyen d'admission du moyen asservi (9 et 10), et dans lequel le second moyen de commande de transmission de pression comprend un moyen (32 et 33) de réglage par tout ou rien, incorporé dans la vanne asservie (10).

15. Dispositif de commande hydraulique suivant la revendication 14, comprenant en outre un moyen formant canalisation pour transmettre la pression de réglage au moyen (20) de freinage, et un clapet de retenue (26) relié au moyen formant canalisation en parallèle avec le moyen (32 et 33) de réglage par tout ou rien pour empêcher le retour de la pression de réglage vers la vanne (13) de distribution.

16. Dispositif de commande suivant la revendication 13, dans lequel le moyen d'admission du moyen asservi (9 et 10) comprend une paire de vannes-pilotes (23a et 23b), et dans lequel le premier moyen de commande de transmission de pression comprend une vanne sélectrice (24) pour soutirer la plus élevée des pressions venant de la paire de vannes-pilotes, et dans lequel le second moyen de commande de transmission de pression comprend un moyen (32 et 33) de réglage par tout ou rien incorporé dans la vanne asservie (10).

17. Dispositif de commande hydraulique suivant la revendication 16, comprenant en outre un moyen formant canalisation pour transmettre la pression de réglage au moyen (21a et 21b) de freinage, et un clapet de retenue (26) relié au moyen formant canalisation en parallèle avec le moyen (32 et 33) de réglage par tout ou rien pour empêcher le retour de pression de réglage vers la vanne sélectrice (24).

18. Dispositif de commande hydraulique suivant la revendication 1, dans lequel le moyen d'arrêt de moteur comprend un moyen (20; 21a et 21b) de freinage prévu pour libérer le moteur (2) de son état de freinage lorsqu'une pression de réglage émanant d'une source (17) de fluide hydraulique y est reçue, et dans lequel les premier et second moyens de réglage comprennent un moyen commun de commande de transmission de pression (14 et 22; 22), sensible à la pression de fonctionnement d'un fluide hydraulique dans le moyen asservi (9 et 10) du côté sortie de sa vanne asservie (10), pour transmettre la pression de réglage au moyen de freinage quand la pression de fonctionnement est sensiblement supérieure à une pression de purge.

19. Dispositif de commande hydraulique suivant la revendication 18, dans lequel les premier et second moyens de réglage comprennent en outre un moyen provoquant une réaction, monté dans le moyen hydraulique asservi (9) pour y créer une pression de fonctionnement suffisamment élevée du côté sortie de la vanne asservie (10) quand cette dernière s'écarte de son point mort.

20. Dispositif de commande hydraulique suivant la revendication 19, dans lequel le moyen provoquant une réaction comprend un moyen formant ressort monté dans le cylindre asservi (9) du moyen asservi.

21. Dispositif de commande hydraulique suivant la revendication 18, dans lequel le moyen de commande de transmission de pression comprend une vanne sélectrice (22) pour soutirer la pression de fonctionnement du côté sortie de la vanne asservie (10), et une vanne (14) de distribution commandée par la pression de fontionnement soutirée par l'intermédiaire de la vanne sélectrice.

22. Dispositif de commande hydraulique suivant la revendication 18, dans lequel le moyen de commande de transmission de pression comprend une vanne sélectrice (22) pour soutirer la pression de fonctionnement du côté sortie de la vanne asservie (10) pour l'utiliser comme pression de réglage.

**Patentansprüche**

1. Hydraulische Antriebseinrichtung mit einer hydraulischen Verstellpumpe (1), einem von dieser getriebenen Hydromotor (2), der eine Last (3) relativ hoher Trägheit betätigt, wobei die Pumpe und der Motor so zusammengeschaltet sind, daß sie einen geschlossenen Hydraulikkreis bilden, hydraulischen Servoelementen (9, 10), die von einem Hydraulikfluid betätigbar sind, das durch eine Fluidspeiseleitung von einer Hydraulikfluidversorgung zuführbar ist zur Regulierung des Fördervolumens der Pumpe nach Maßgabe einer Betätigung eines Antriebs, und einem in die Fluidspeiseleitung eingeschalteten Drucksteuerventil (11), das auf einen Hauptleitungsdruck in dem geschlossenen Hydraulikkreis anspricht und die Zufuhr von Hydraulikfluid zu den Servoelementen verringert, um so zu verhindern, daß der Hauptleitungsdruck einen vorbestimmten Pegel übersteigt, wenn der Hauptleitungsdruck aufgrund der Trägheit der Last ansteigt, gekennzeichnet durch:

dem Motor (2) zugeordnete Anhaltemittel (20; 21a and 21b), die in ihrer Wirkstellung den Motor (2) im Ruhezustand halten;

erste Steuermittel (13; 24 und 25; 13 und 26; 24 und 26; 14 und 22; 22), die auf den Betrieb der Eingangsmittel der Servoelemente (9 und 10) ansprechen und beim Betrieb der Eingangsmittel die Freigabe de Motor-Anhaltemittel aus der Wirkstellung bewirken, um die Rotation des Motors auszulösen und fortzusetzen;

die Servoelemente (9 und 10) und das Drucksteuerventil (11) umfassende Mittel zur Anpassung des Hauptleitungsdrucks und hydraulischen Erfassung des Rotationszustands des Motors (2) und zur Erzeugung eines die Rotation des Motors bezeichnenden Signals, wenn der Antrieb betätigt ist, um eine Rückkehr zur Neutrallage zu bewirken, wobei das Motordrehsignal eine Zustandsänderung umfaßt, die durch den kombinierten Betrieb der Servoelemente und des Drucksteuerventils bewirkt ist;

zweite Steuermittel (14; 14 uns 22; 22 und 25; 10, C1 und C2; 14 und 22; 22), die auf das Motordrehsignal ansprechen und die Freigabe der Motoranhaltemittel aus der Wirkstellung ermöglichen, so daß die Motoranhaltemittel aus der Wirkstellung freigehalten bleiben, während der Motor aufgrund der Trägheit der Last (3) noch umläuft, nachdem der Antrieb zur Rückkehr in seine Neutrallage betätigt wurde, wogegen die Motoranhaltemittel in Abwesenheit des Motordrehsignals, wenn der Motor vollständig zu rotieren aufhört, in die Wirkstellung gebracht werden.

2. Hydraulische Antriebseinrichtung nach Anspruch 1, wobei die Motoranhaltemittel eine Bremse (20; 21a und 21b) umfassen, die den Motor (2) aus einem Bremszustand freigibt, wenn ein Steuerdruck von einer Hydraulikfluidversorgung (17) erhalten wird, und wobei die ersten und zweiten Steuermittel erste und zweite Druckübertragungs-Steuermittel umfassen, die auf den Betrieb der Eingangsmittel bzw. das Motordrehsignal ansprechen und den Steuerdruck zu der Bremse übertragen.

3. Hydraulische Antriebseinrichtung nach Anspruch 2, wobei die Bremse einen Bremszylinder (20) aufweist, der die Bremskraft an eine Abtriebswelle des Hydromotors (2) anlegt.

4. Hydraulische Antriebseinrichtung nach Anspruch 2, wobei die Bremse Schaltventile (21a und 21b) aufweist, die in Hauptleitungen des geschlossenen Hydraulikkreises angeordnet sind.

5. Hydraulische Antriebseinrichtung nach Anspruch 1, wobei die Motoranhaltemittel eine Bremse (20; 21a und 21b) aufweisen, die den Motor (2) aus einem Bremszustand freigibt, wenn ein Steuerdruck von einer Hydraulikfluidversorgung (17) empfangen wird, und wobei die ersten Steuermittel ein erstes Druckübertragungs-Steuerelement (13) aufweisen, das mit Eingangsmitteln der Servoelemente (9 und 10) gekoppelt ist und den Steuerdruck zu der Bremse überträgt, wenn die Eingangsmittel betätigt sind, und wobei die zweiten Steuermittel ein zweites Druckübertragungs-Steuerelement (14) aufweisen, das auf den Druck einer Hydraulikfluidzufuhr zu dem Servoelement an der Ausgangsseite des Steuerventils (11) anspricht und den Steuerdruck zu der Bremse überträgt, wenn der Speisedruck erheblich niedriger als ein normaler Speisedruck der Hydraulikfluidversorgung bei Betrieb des Steuerventils (11) wird.

6. Hydraulische Antriebseinrichtung nach Anspruch 5, wobei das erste Druckübertragungs-Steuerelement ein erstes Richtungssteuerventil (13) umfaßt, das mit den Eingangsmitteln der Servoelemente (9 und 10) gekoppelt ist, und wobei das zweite Druckübertragungs-Steuerelement ein zweites Richtungssteuerventil (14) umfaßt, das dem ersten Richtungssteuerventil (13) parallelgeschaltet ist und durch den Druck der Hyraulikfluidzufuhr zu den Servoelementen betätigbar ist.

7. Hydraulische Antriebseinrichtung nach Anspruch 6, ferner umfassend Mittel, durch die der Steuerdruck zu der Bremse (20; 21a und 21b) übertragbar ist, sowie ein Pendelventil (15), das an die Leitung angeschlossen ist und als Steuerdruck einen höheren der Drücke des ersten bzw. des zweiten Richtungssteuerventils (13 und 14) wählt, wobei das erste und das zweite Richtungssteuerventil im nichtaktivierten Zustand eine Fluidverbindung der Leitung mit einem Ablauf gestatten.

8. Hydraulische Antriebseinrichtung nach Anspruch 1, wobei die Motoranhaltemittel eine Bremse (20; 21a und 21b) aufweisen, die den Motor (2) aus einem Bremszustand freigibt, wenn ein Steuerdruck von einer Hydraulikfluidversorgung (17) empfangen wird, und wobei die ersten Steuermittel erste Druckübertragungs-Steuermittel (13; 24) aufweisen, die einem Eingang der Servoelemente (9 und 10) zugeordnet sind zur Übertragung des Steuerdrucks zu der Bremse, wenn der Eingang aktiviert wird, und wobei die zweiten Steuermittel zweite Druckübertragungs-Steuermittel (14 und 22; 22) umfassen, die auf den Betriebsdruck eines Hydraulikfluids in den Servoelementen an der Ausgangsseite eines Servoventils (10) derselben ansprechen und den Steuerdruck zu der Bremse übertragen, wenn der Betriebsdruck erheblich höher als ein Ablaufdruck ist.

9. Hydraulische Antriebseinrichtung nach Anspruch 8, wobei die ersten Druckübertragungs-Steuermittel ein erstes Richtungssteuerventil (13) aufweisen, das mit dem Eingang der Servoelemente gekoppelt ist, und wobei die zweiten Druckübertragungs-Steuermittel ein Pendelventil (22), das den Betriebsdruck an der Ausgangsseite des Servoventils (10) abzieht, sowie ein zweites Richtungssteuerventil (14) aufweisen, das dem ersten Richtungssteuerventil (13) parallelgeschaltet ist und von dem durch das Pendelventil abgezogenen Betriebsdruck aktivierbar ist.

10. Hydraulische Antriebseinrichtung nach Anspruch 9, ferner umfassend eine Leitung zur Übertragung des Steuerdrucks an die Bremse (20) und ein an die Leitung angeschlossenes Pendelventil (15), das als den Steuerdruck einen höheren der Drücke des ersten und des zweiten Richtungssteuerventils (13 bzw. 14) wählt, wobei das erste und das zweite Richtungssteuerventil im nichtaktivierten Zustand dine Fluidverbindung der Leitung mit einem Ablauf ermöglichen.

11. Hydraulische Antriebseinrichtung nach Anspruch 8, wobei die Eingangsmittel der Servoelemente (9 und 10) zwei Vorsteuerventile (23a und 23b) aufweisen, die ersten Druckübertragungs-Steuermittel ein erstes Pendelventil (24) zum Abziehen eines höheren der Vorsteuerdrücke von den Vorsteuerventilen aufweisen, und die zweiten Druckübertragungs-Steuermittel ein zweites Pendenveltil (22) zum Abziehen eines Betriebsdrucks in der Ausgangsweite des Servoventils (10) aufweisen.

12. Hydraulische Antriebseinrichtung nach Anspruch 11, ferner umfassend eine Leitung, durch die der Steuerdruck zu der Bremse (21a und 21b) übertragbar ist, und ein drittes Pendelorgan (25), das mit der Leitung verbunden ist und als Steuerdruck einen höheren der Drücke des ersten und des zweiten Pendelventils (24 und 22) wählt.

13. Hydraulische Antriebseinrichtung nach Anspruch 1, wobei die Motoranhaltemittel eine Bremse (20; 21a und 21b) aufweisen, die den Motor (2) aus einem Bremszustand freigibt, wenn ein Steuerdruck von einer Hydraulikfluidversorgung (17) empfangen wird, und wobei die ersten Steuermittel ein erstes Druckübertragungs-Steuermittel (13; 24) aufweisen, das Eingangsmitteln der Servoelemente (9 und 10) zugeordnet ist zur Übertragung des Steuerdrucks zu der Bremse, wenn die Eingangsmittel aktiviert sind, und die zweiten Steuermittel zweite Druckübertragungs-Steuermittel (10, 32 und 33) aufweisen, die auf die Aktivierung eines Servoventils (10) der Servoelemente ansprechen und die Freigabe des in der Bremse empfangenen Steuerdrucks verhindern, bis das Servoventil in eine Neutralstellung zurückgebracht ist.

14. Hydraulische Antriebseinrichtung nach Anspruch 13, wobei die ersten Druckübertragungs-Steuermittel ein mit den Eingangsmitteln der Servoelemente (9 und 10) gekoppeltes Richtungssteuerventil (13) aufweisen und die zweiten Druckübertragungs-Steuermittel ein in das Servoventil (10) eingebautes Schaltventil (32 und 33) aufweisen.

15. Hydraulische Antriebseinrichtung nach Anspruch 14, ferner umfassend eine Leitung, durch die der Steuerdruck zu der Bremse (20) übertragbar ist, und ein an die Leitung parallel mit den Schaltventilen (32 und 33) angeschlossenes Absperrventil (26), das die Rückführung des Steuerdrucks zu dem Richtungssteuerventil (13) verhindert.

16. Hydraulische Antriebseinrichtung nach Anspruch 13, wobei die Eingangsmittel der Servoelemente (9 und 10) ein Paar Vorsteuerventile (23a und 23b) aufweisen, die ersten Druckübertragungs-Steuermittel ein Pendelventil (24) aufweisen, das einen höheren der Vorsteuerdrücke von den beiden Vorsteuerventilen abzieht, und die zweiten Druckübertragungs-Steuermittel ein in das Servoventil (10) eingebautes Schaltventil (32 und 33) aufweisen.

17. Hydraulische Antriebseinrichtung Anspruch 16, ferner umfassend eine Leitung, durch die der Steuerdruck zu der Bremse (21a und 21b) übertragbar ist, und ein Absperrventil (26), das parallel zu dem Schaltventil (32 und 33) an die Leitung angeschlossen ist und eine Rückführung des Steuerdrucks zu dem Pendelventil (24) verhindert.

18. Hydraulische Antriebseinrichtung nach Anspruch 1, wobei die Motoranhaltemittel eine Bremse (20; 21a und 21b) aufweisen, die den Motor (2) aus einem Bremszustand freigibt, wenn ein Steuerdruck von einer Druckfluidversorgung (17) empfangen wird, und wobei die ersten und zweiten Steuermittel gemeinsame Druckübertragungs-Steuermittel (14 und 22; 22) aufweisen, die auf den Betriebsdruck eines Hydraulikfluids in den Servoelementen (9 und 10) an der Ausgangsseite eines Servoventils (10) derselben ansprechen und den Steuerdruck zu der Bremse übertragen, wenn der Betriebsdruck erheblich höher als ein Ablaufdruck ist.

19. Hydraulische Antriebseinrichtung nach Anspruch 18, wobei die ersten und zweiten Steuermittel ferner Gegenkraft-Beaufschlagungsmittel, die in den hydraulischen Servoelementen (9) angeordnet sind, aufweisen, die die Erzeugung eines ausreichend hohen Betriebsdrucks an der Ausgangsseite des Servoventils (10) bewirken, wenn die Servoelemente aus einer Neutrallage verschoben werden.

20. Hydraulische Antriebseinrichtung nach Anspruch 19, wobei die Gegenkraft-Beaufschlagungsmittel eine in einem Servozylinder (9) der Servoelemente angeordnete Feder umfassen.

21. Hydraulische Antriebseinrichtung nach Anspruch 18, wobei die Druckübertragungs-Steuermittel ein Pendelventil (22), das den Betriebsdruck an der Ausgangsseite des Servoventils (10) abzieht, sowie ein Richtungssteuerventil (14) umfassen, das von dem durch das Pendelventil abgezogenen Betriebsdruck aktivierbar ist.

22. Hydraulische Antriebseinrichtung nach Anspruch 18, wobei die Druckübertragungs-Steuermittel ein Pendelventil (22) aufweisen, das den Betriebsdruck an der Ausgangsseite des Servoventils (10) abzieht und ihn als Steuerdruck nutzt.

# FIG. I

F I G. 2

## F I G. 3

FIG. 4

FIG. 5

## F I G. 6

## F I G. 9

# F I G. 7

# F I G. 8

# FIG. 10